# EUROPÄISCHE PATENTANMELDUNG

(11) **EP 0 909 694 A2**
(43) Veröffentlichungstag der Anmeldung: **21.04.1999**
(21) Anmeldenummer: 98117811.4
(22) Anmeldetag: 19.09.1998
(51) Int. Cl.: B62D 25/14

(54) **Stirnwand für ein Kraftfahrzeug**

(30) Priorität: 16.10.1997 DE 19745760
(71) Anmelder: DaimlerChrysler AG, 70567 Stuttgart (DE)
(72) Erfinder: Haberstroh, Rudolf, 78136 Schonach (DE)

(57) **Zusammenfassung**

Aus dem Stand der Technik ist eine Stirnwand bekannt, bei der zu beiden Seiten der Stirnwandmitte formgleiche Durchlässe für die Aufnahme unterschiedlicher Einbaumodule vorgesehen sind.

Erfindungsgemäß ist für das wenigstens eine Funktionsaggregat vor oder an einer dem Fahrzeuginnenraum abgewandten Vorderseite der Stirnwand sowohl rechtsseitig als auch linksseitig ein in Fahrzeugquerrichtung in seiner Stirnwandposition definierter Anbauraum vorgesehen, und die wenigstens eine Baueinheit von elektronischen Steuergeräten ist mit ihrer Außenkontur - in Fahrzeugquerrichtung gesehen - in Abstand zu dem jeweiligen Anbauraum positioniert.

Einsatz für Personenkraftwagen.

## Beschreibung

Die Erfindung betrifft eine Stirnwand für ein Kraftfahrzeug, insbesondere für einen Personenkraftwagen, mit wenigstens einer Baueinheit elektronischer Steuergeräte sowie mit wenigstens einem in Linkslenker- oder Rechtslenkerbauweise auf unterschiedlichen Seiten zu einer - in Fahrzeuglängsrichtung gesehen - Stirnwandmitte an der Stirnwand festlegbaren Funktionsaggregat.

Eine solche Stirnwand ist aus der DE 195 24 165 A1 bekannt. Die bekannte Stirnwand weist zu beiden Seiten der Stirnwandmitte jeweils einen formgleichen Durchlaß auf, wobei in die Durchlässe wahlweise links oder rechts ein entsprechendes Funktionsaggregatmodul einsetzbar ist. In einem Funktionsaggregatmodul kann der Durchtritt einer Lenkspindel vorgesehen sein. Der Durchlaß kann auch durch eine Baueinheit elektronischer Steuergeräte verschlossen werden. Je nach Rechtslenker- oder Linkslenkerbauweise können somit die entsprechenden Module in der symmetrisch aufgebauten Stirnwand positioniert werden. Insbesondere die Anordnung elektronische Steuergeräte muß jedoch bei der bekannten Stirnwand abhängig von der Rechtslenker- oder Linkslenkerbauweise jeweils entsprechend auf der linken oder auf der rechten Seite vorgesehen sein.

Aufgabe der Erfindung ist es, eine Stirnwand der eingangs genannten Art zu schaffen, die eine Unterbringung der elektronischen Steuergeräte unabhängig von der Linkslenker- oder Rechtslenkerbauweis= der Stirnwand gewährleistet.

Diese Aufgabe wird dadurch gelöst, daß für das wenigstens eine Funktionsaggregat an der Stirnwand sowohl rechtsseitig als auch linksseitig ein in Fahrzeugquerrichtung in seiner Stirnwandposition definiertar Anbauraum vorgesehen ist, und daß die wenigstens eine Baueinheit von elektronischen Steuergeräten mit ihrer Außenkontur - in Fahrzeugquerrichtung gesehen - in Abstand zu dem jeweiligen Anbauraum positioniert ist. Dadurch wird gewährleistet, daß die Anordnung der elektronischen Steuergeräte - vorzugsweise in einer entsprechenden Modulbox - die unterschiedliche Positionierung des wenigstens einen Funktionsaggregates bei Rechts- oder Linkslenkerbauweise nicht behindert, so daß die durch die Steuergerätebox definierte Baueinheit der elektronischen Steuergeräte an der Stirnwand montierbar ist, bevor die Stirnwand für den Rechtslenker- oder Linkslenkereinsatz spezifiziert ist. Ein bevorzugter Abstand sind 10mm. Dabei können für die Steuergeräte lediglich eine einzelne Baueinheit oder aber auch - je nach Anzahl der einzusetzenden Steuergeräte - zwei Baueinheiten vorgesehen sein, die dann vorzugsweise auf gegenüberliegenden Seiten der Stirnwand, ebenfalls uner den beschriebenen Bedingungen, positioniert werden. Als für Linkslenker- oder Rechtslenkerbauweise unterschiedlich positionierbare Funktionsaggregate sind insbesondere Klimaanlagenaggregate und Bremsaggregate vorgesehen.

In Ausgestaltung der Erfindung ist die wenigstens eine Baueinheit - von der Stirnwandmitte aus in Fahrzeugquerrichtung gesehen - außerhalb des wenigstens einen Anbauraumes positioniert. Jeweils seitlich außen an der Stirnwand steht ausreichend Raum für die Anordnung der Steuergeräte zur Verfügung.

In weiterer Ausgestaltung der Erfindung weist der Anbauraum für das Funktionsaggregat sowohl rechts- als auch linksseitig den gleichen Abstand in Fahrzeugquerrichtung zur Stirnwandmitte auf. Dadurch ist eine besonders gute Raumausnutzung erzielbar.

In weiterer Ausgestaltung der Erfindung weisen bei zwei auf gegenüberliegenden Seiten der Stirnwand - auf die Stirnwandmitte bezogen - positionierten Baueinheiten von elektronischen Steuergeräten die Baueinheiten jeweils den gleichen Abstand zu dem jeweiligen rechtsseitigen oder linksseitigen Anbauraum auf. Auch durch diese Ausgestaltung wird bei zwei Steuergeräteboxen eine besonders gute Raumausnutzung erzielt.

Weitere Vorteile und Merkmale der Erfindung ergeben sich aus den Unteransprüchen sowie aus der nachfolgenden Beschreibung von bevorzugten Ausführungsbeispielen der Erfindung, die anhand der Zeichnungen dargestellt sind.
- Fig. 1: zeigt schematisch eine Draufsicht auf einen Personenkraftwagen im Bereich einer Ausführungsform einer erfindungsgemäßen Stirnwand,
- Fig. 2: eine Darstellung ähnlich Fig. 1 mit einer weiteren Ausführungsform einer erfindungsgemäßen Stirnwand, bei der zwei Baueinheiten von Steuergeräten für eine Linkslenkebauweise vorgesehen sind und
- Fig. 3: eine Darstellung ähnlich Fig. 2, bei der die Stirnwand nach Fig. 2 in Rechtslenkerbauweise ausgeführt ist.

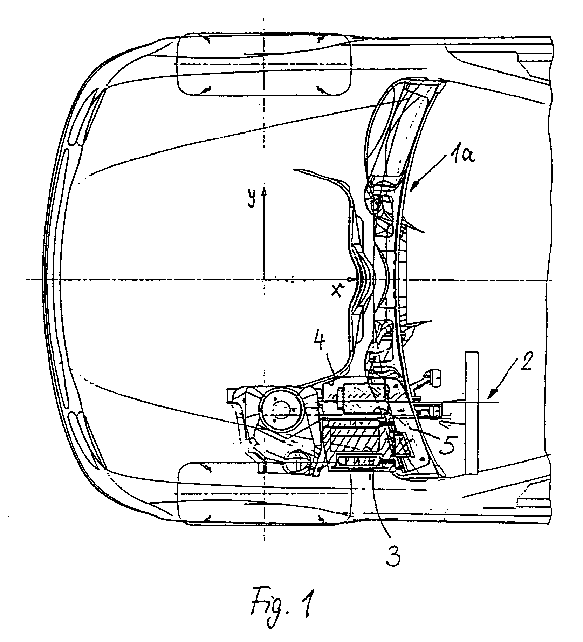

Ein Personenkraftwagen nach Fig. 1 weist in an sich bekannter Weise einen Fahrzeuginnenraum sowie einen Vorbaubbereich auf, in dem vorzugsweise ein Antriebsmotor untergebracht ist. Der durch den Vorbaubereich gebildete Motorraum ist von dem Fahrzeuginnenraum durch eine Stirnwand 1a getrennt, die die Fahrgastzelle zum Vorbaubereich hin abschließt und sich über die Breite der Fahrgastzelle erstreckt. Eine Stirnwandmitte der Stirnwand 1a wird durch eine vertikale Fahrzeugmittellängsebene definiert, die in Fahrzeuglängsrichtung X verläuft. In Fahrtrichtung des Personenkraftwagens gesehen auf der linken Seite weist die Stirnwand eine Fahrfunktionseinheit 2 auf, die aus der Lenkanlage sowie einer Brems- und Gaspedal umfassenden Pedalanordnung zusammengesetzt ist. Diese Anordnung der Fahrfunktionseinheit 2 auf der linken Seite der Stirnwand 1a definiert eine Linkslenkerbauweise der Stirnwand 1a. Auf der dem Motorraum zugewandten Vorderseite der Stirnwand 1a ist links außen eine Steuergerätebox 3 positioniert, die verschiedene elektrische oder elektronische Steuergeräte aufnimmt. Die Außenkontur dieser durch die Steuergerätebox sowie die innerhalb der Steuergerätebox untergebrachten Steuergeräte definierten Baueinheit für elektrische oder elektronische Steuergeräte ist durch die Schraffur in Fig. 1 dargestellt. Die Steuergerätebox 3 ist in einer definierten Koordinatenposition in Fahrzeugquerrichtung Y und damit in einem definierten Abstand zur Stirnwandmitte angeordnet. Dieser Abstand ist dadurch definiert, daß der geringste Abstand der Steuergerätebox 3 zur Stirnwandmitte in Fahrzeugquerrichtung Y und damit das geringste Y-Maß in jedem Fall größer ist als der Abstand der Außenkante eines Bremsgerätes 5 und damit dessen Einbaumaßen zur Stirnwandmitte. Dieses Bremsgerät 5 ist je nach Linkslenker- oder Rechtslenkerbauweise entweder links oder rechts der Stirnwandmitte unterzubringen. Das innerste Y-Maß der Steuergerätebox 3, wobei auch die Kontur einer etwaigen Halterung der Steuergerätebox 3 bereits berücksichtigt ist, weist in jedem Fall noch einen wenigstens geringe- Abstand zu dem Bremsgerät 5 bzw. dessen Anbauraumpositionierung auf. Vorzugsweise beträgt dieser Abstand wenigstens 10mm.

Ebenfalls in seinen Koordinaten in Fahrzeugquerrichtung Y vorgegeben ist der Anbauraum für ein Klimaanlagenaggregat 4, insbesondere eine Luftansaugung/Wasserabscheidung, das ebenfalls bei Rechtslenker- bzw. Linkslenkerbauweise auf unterschiedlichen Seiten untergebracht werden muß. Sowohl für die Rechtslenkerals auch für die Linkslenkerbauweise kann der jeweilige Anbauraum für das Klimaanlagenaggregat 4 innerhalb des Anbauraumes für das Bremsgerät 5 bzw. auch umgekehrt vorgesehen werden. Die Lage der Steuergerätebox 3 befindet sich so weit in Abstand zu dem vorgesehenen Anbauraum des Klimaanlagenaggregates 4, daß auch die für eine Rechtslenkerbauweise dargestellte Anordnung des Klimaanlagenaggregates 4 nach Fig. 1 keine Lageänderung der Steuergerätebox 3 erzwingt. Die Steuergerätebox 3 kann somit unabhängig von der Gestaltung der Stirnwand 1a als Rechtslenker- oder als Linkslenkerbauweise immer auf der linken Seite verbleiben.

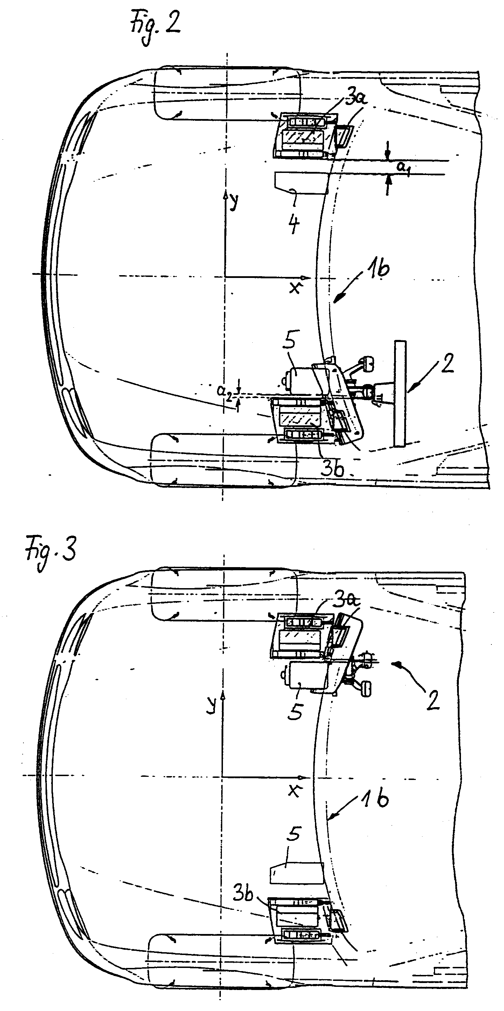

Beim Ausführungsbeispiel nach den Figuren 2 und 3 ist gegenüber dem Ausführungsbeispiel nach Fig. 1 eine vergrößerte Anzahl von Steuergeräten vorgesehen, die nicht mehr in einer einzelnen Steurgerätebox untergebracht werden können. Die Steuergeräte werden somit in zwei Baueinheiten aufgeteilt, die durch eine linke Steuergerätebox 3b und eine rechte Steuergerätebox 3a definiert sind. Beide Steuergeräteboxen 3a und 3b sind jeweils in einer Einbaulage - auf die Fahrzeugquerrichtung Y bezogen - so weit außerhalb zur Stirnwandmitte positioniert, daß zu dem jeweils für Rechtslenker- und Linkslenkerbauweise vorgesehenen Anbauräumen für das Bremsgerät 5 und das Klimaanlagenaggregat 4 ausreichende Abstände a₁, a₂ in Fahrzeugquerrichtung verbleiben. Der Abstand a₂ zum jeweiligen Anbauraum des Bremsgerätes 5 ist geringer als der Abstand a₁ zum jeweiligen Arbauraum des Klimaanlagenaggregates 4 auf jeder Seite. Wie anhand Figuren 2 und 3 gut nachvollzogen werden kann, behalten die Steuergeräteboxen 3a, 3b ihre Einbaulage in Fahrzeugquerrichtung Y an der Stirnwand 1b unabhängig von der Gestaltung der Stirnwand 1b in Linkslenkerbauweise (Fig. 2) oder in Rechtlenkerbauweise (Fig. 3) unverändert bei. Somit kann für die Steuergeräte einschließlich entsprechender Verkabelungen bereits eine weitgehende Vormontage an der Stirnwand 1b oder auch gemäß Ausführungsbeispiel nach Fig. 1 an der Stirnwand 1a erfolgen, bevor über die Spezifizierung der Stirnwand 1a, 1b als Linkslenker- oder Rechtslenkerbauart entschieden ist.

## Patentansprüche

1. Stirnwand für ein Kraftfahrzeug, insbesondere für einen Personenkraftwagen, mit wenigstens einer Baueinheit elektronischer Steuergeräte sowie mit wenigstens einem in Linkslenker- oder Rechtslenkerbauweise auf unterschiedlichen Seiten zu einer - in Fahrzeuglängsrichtung gesehen - Stirnwandmitte vor oder an der Stirnwand festlegbaren Funktionsaggregat, wobei für das wenigstens eine Funktionsaggregat (4, 5) an einer dem Fahrzeuginnenraum abgewandten Vorderseite der Stirnwand (1a, 1b) sowohl rechtsseitig als auch linksseitig ein in Fahrzeugquerrichtung (Y) in seiner Stirnwandposition definierter Anbauraum vorgesehen ist,
**dadurch gekennzeichnet, daß**
die wenigstens eine Baueinheit (3a, 3b) von elektronischen Steuergeräten mit ihrer Außenkontur - von der Stirnwandmitte aus in Fahrzeugquerrichtung (Y) gesehen - außerhalb des wenigstens einen Anbauraumes positioniert ist.

2. Stirnwand nach Anspruch 1,
**dadurch gekennzeichnet, daß**
der Anbauraum für des Funktionsaggregat (4, 5) sowohl rechtsals auch linksseitig den gleichen Abstand in Fahrzeugquerrichtung (Y) zur Stirnwandmitte aufweist.

3. Stirnwand nach einem der vorhergehenden Ansprüche
**dadurch gekennzeichnet, daß**
bei zwei auf gegenüberliegenden Seiten der Stirnwand (1a, 1b) - auf die Stirnwandmitte bezogen - positionierten Baueinheiten (3a, 3b) von elektronischen Steuergeräten die Baueinheiten (3a, 3b) jeweils den gleichen Abstand zu dem jeweiligen rechtsseitigen oder linksseitigen Anbauraum aufweisen.
